# FASCICULE DE BREVET EUROPEEN

(11) **EP 0 504 156 B1**
(45) Date de publication et mention de la délivrance du brevet: **19.01.1994**
(21) Numéro de dépôt: 90916307.3
(22) Date de dépôt: 26.10.1990
(51) Int. Cl.: C01G 49/00, C02F 1/72

(54) **FERRATES DE METAUX ALCALINS OU ALCALINO-TERREUX, LEUR PREPARATION ET LEURS APPLICATIONS INDUSTRIELLES**
FERRATE VON ALKALI- ODER ERDALKALIMETALLEN, DEREN HERSTELLUNG UND DEREN INDUSTRIELLE VERWENDUNG
FERRATES OF ALCALINE OR ALCALINE EARTH METALS, THEIR PREPARATION AND INDUSTRIAL APPLICATIONS

(30) Priorité: 08.11.1989 FR 8914658
(43) Date de publication de la demande: 23.09.1992
(73) Titulaire: CENTRE INTERNATIONAL DE L'EAU DE NANCY ( NAN.C.I.E.), F-54500 Vandoeuvre-les-Nancy (FR); EVRARD, Omer, F-54500 Vandoeuvre-les-Nancy (FR)
(72) Inventeur: EVRARD, Omer, F-54500 Vandoeuvre-les-Nancy (FR); GERARDIN, René, F-54600 Villers-les-Nancy (FR); SCHMITT, Nathalie, F-88700 Rambervillers (FR); EVRARD, Jean-Luc, F-67100 Strasbourg (FR)
(74) Mandataire: Keib, Gérard
(86) Numéro de dépôt international: FR9000775
(87) Numéro de publication internationale: WO9107352

(56) Documents cités:
- EP-A- 0 082 590
- FR-A- 2 635 318
- JP-A-63 162 095
- US-A- 2 758 090

## Description

La présente invention concerne de nouveaux ferrates de métaux alcalins ou alcalino-terreux.

L'invention vise également leur procédé de préparation et leurs applications industrielles.

On sait que les ferrates de formule M Fe0₄, dans laquelle M est un atome de Ca ou Ba, ou deux atomes de Na ou K, sont des oxydants puissants.

Lorsqu'ils sont introduits dans l'eau, ils libèrent de l'oxygène selon la réaction suivante :

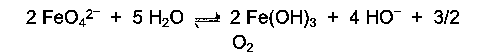

Toutefois, ces ferrates ne sont pas stables, de sorte qu'ils ne peuvent pas être conservés pendant de longues durées. Cette instabilité est incompatible avec une utllisation industrielle de ces ferrates en tant qu'oxydants.

Le but de la présente invention est de créer des ferrates stables, c'est-à-dire utilisables industriellement notamment en tant qu'oxydants.

Suivant l'invention, ces ferrates sont caractérisés en ce au'ils ont la formule :

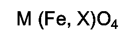

dans laquelle M désigne deux atomes de Na ou K ou un atome de Ca ou Ba, et X est un atome dont le cation a la structure électronique d'un gaz rare, lesdits ferrates étant isomorphes des ferrates de formule M Fe 0₄, dans laquelle M a la même définition que ci-dessus.

Ainsi les ferrates selon l'invention, se distinguent des ferrates de formule M Fe 0₄ par le fait que certains atomes Fe ont été remplacés par des atomes X.

La formule M(FeX)0₄ peut être établie par une analyse chimique classique.

Il a été établi par diffraction de rayons X que les ferrates M(FeX)0₄ ont une structure cristalline identique à celle des ferrates M Fe 0₄ . Seule la dimension de la maille cristalline varie légèrement du fait de présence des atomes X, notamment lorsque la dimension de ceux-ci est différente de celle des atomes de Fe qu'ils remplacent partiellement.

La stabilité des ferrates selon l'invention peut s'expliquer par le fait que le cation de l'atome X a la structure électronique d'un gaz rare.

Ainsi l'atome X peut être choisi parmi les suivants : AI, Si, P, S, CI, Mo, Mn, Cr et le mélange de ces atomes.

Les cations correspondants, à savoir :
A13⁺, Si4⁺, P5+, S6⁺, C17⁺, Cr6⁺, Mo6⁺ et Mn7⁺ ont la structure électronique d'un gaz rare.

Selon une version préférée de l'invention, le rapport Fe/X (nombres d'atomes de Fe sur celui des atomes de X) est compris entre 0,5 et 0,9.

Lorsque les ferrates selon l'invention remplissent cette condition supplémentaire, ils présentent à la fois une grande stabilité et un excellent pouvoir oxydant.

Selon un autre aspect de l'invention, le procédé de préparation des ferrates selon l'invention est caractérisé en ce qu'on fait réagir le composé M OH et un oxydant sur un composé chimique dans lequel les atomes de Fe sont combinés avec des atomes X.

Le composé "M OH" peut être 2NaOH, 2K OH, Ca(OH)₂, ou Ba(OH)₂.

Ainsi, on peut faire réagir le composé M OH et un oxydant sur du sulfate, silicate, phosphate, chromate, molybdate, tungstate, manganate ou aluminate de fer.

A titre d'exemple, pour préparer le ferrate de formule :

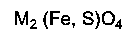

où M₂ est représenté par deux atomes de Na ou K, on introduit du sulfate de fer dans une solution de soude ou de potasse, on agite et on sèche le précipité obtenu et on y ajoute un oxydant.

A cet effet, on fait réagir avec la soude ou la potasse au moins la quantité stoechiométrique de sulfate de fer.

Selon une autre version du procédé selon l'invention, on fait réagir avec la soude ou la potasse un mélange de sulfate de fer et d'hypochlorite de Ca.

Le composé de formule

M₂(Fe S)0₄, est le ferrate préféré selon l'invention, car il peut être obtenu en partant du sulfate de fer FeS0₄, 7 H₂0 qui est un produit chimique bon marché. Il est notamment un résidu de l'élaboration industrielle du titane.

On va maintenant développer les aspects théoriques qui sont à la base de la présente invention.

Il est bien connu que les sels de fer les mieux connus sont ceux où l'élément métallique est aux degrés d'oxydation Il et III, à savoir Fe(II) qui a un caractère réducteur doux, et Fe(III) qui a un caractère oxydant doux.

Les degrés d'oxydation supérieurs à III sont en revanche beaucoup moins connus, soit que les composés correspondants sont limités tels que Ba-Fe0₃ pour le degré d'oxydation IV, soit que les sels sont difficiles à synthétiser et peu stables dans le temps tels que K₂Fe0₄ pour le degré d'oxydation VI.

Il est établi depuis longtemps que K₂ Fe 0₄ est isomorphe de K₂Cr0₄ ou K₂S0₄, et que, de même, BaFe0₄ a la même structure que BaCr0₄ ou BaS0₄.

La différence essentielle entre ces types de composés réside dans leur stabilité : en effet, autant sulfates ou chromates sont réputés stables à l'état solide, autant les ferrates se décomposent facilement et, de ce fait, sont de manipulation délicate. Ces derniers présentent en plus la propriété d'oxyder l'eau avec dégagement d'oxygène et précipitation d'hydroxyde ferrique; seul, le manganèse, dans son groupement MnO-₄ a la propriété d'oxyder l'eau avec dégagement d'oxygène, mais la cinétique de la réaction est lente de telle sorte que les cristaux de permanganate sont stables dans le temps.

Dans les ferrates, le groupement Fe0₄²- a une structure tétraédrique.

L'idée qui est à la base de l'invention consiste à stabiliser ce groupement tétraédrique en substituant une partie des atomes de fer. La stabilisation du groupement tétraédrique Fe0₄²⁻ est obtenue par la substitution partielle du fer par un autre élément X existant sous la forme XO₄^{m-} (m est un nombre entier) , tel que Si0₄⁴⁻, P0₄³⁻, S0₄²⁻, ClO₄⁻ , Cr0₄²⁻, Mo0₄^{r}, W0₄²⁻, Mn0₄- et A10₄⁵- qui sont bien connus pour leur stabilité.

La théorie des orbitales moléculaires appliquée à un groupement tétraédrique XO₄^{m-} montre que les électrons des quatre atomes d'oxygène viennent occuper toutes les orbitales de liaison a et n dans le groupement. Les orbitales d'antiliaison d'énergie immédiatement supérieure ne sont pas occupées si le cation X⁽⁸⁻ m)⁺ a une structure électronique de gaz rare comme par exemple Al³⁺, Si⁴⁺, P5+, S⁶⁺, Cl⁷⁺, Cr6⁺, Mo⁶⁺, Mn⁷⁺. En revanche, le tétraèdre Fe0₄²⁻ est des- tabilisé si le cation X⁽⁸⁻ m)⁺ possède des électrons d (d¹ pour Mn⁶⁺, d² pour Fe⁶⁺) car dans ce cas les électrons iront se placer sur les orbitales d'antiliaison. On comprend ainsi que la substitution du Fe (VI) par un cation de structure électronique de gaz rare stabilise le système tétraédrique, puisque cette substitution entraîne une diminution de la concentration d'électrons sur les orbitales d'antiliaison.

On donne ci-après à titre d'exemple non limitatif le mode opératoire de la préparation d'un ferrate selon l'invention ayant pour formule :

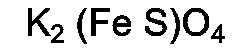

On ajoute à 100 parties en poids d'eau, 100 parties en poids de FeS0₄, 7 H₂0, 70 parties en poids de Ca (CIO)₂ et 200 parties en poids de K OH.

On agite pendant 10 minutes, puis on sèche à l'étuve pendant 3 heures.

On obtient ainsi un produit solide renfermant :
- K₂ (Fe, S) 0₄, dans lequel le nombre d'atomes de Fe est sensiblement égal à celui de S ;
- KCI
- Ca(OH)₂

Le K CI peut être séparé du mélange, en lavant celui-ci avec du méthanol pur ou renfermant jusqu'à 20% d'eau.

Le Ca(OH)₂ n'est pas gênant pour l'application considérée dans la présente invention.

Le produit solide obtenu, débarrassé de K CI, peut être stocké indéfiniment par exemple dans des fûts ou des sacs. Ce produit peut donc être utilisé en tant qu'oxydant, notamment pour l'épuration des eaux, à savoir celles destinées à la consommation et l'eau des piscines.

Lorsque le produit selon l'invention est mis en contact avec l'eau, le fer précipite sous forme d'hydroxyde de fer et le dégagement d'oxygène oxyde les matières organiques contenues dans l'eau, ainsi que les matières minérales telles que les sulfures.

La précipitation d'hydroxyde de fer est bénéfique, car celui-ci agit en tant que floculant.

Bien entendu, l'invention n'est pas limitée aux exemples que l'on vient de décrire et on peut apporter à ceux-ci de nombreuses modifications sans sortir du cadre de l'invention.

## Revendications

1. Ferrates ayant pour formule : 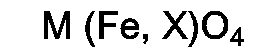 dans laquelle M désigne deux atomes de Na ou K ou un atome de Ca ou Ba, et X est u atome dont le cation a la structure électronique d'un gaz rare, lesdits ferrates étant isomorphes des ferrates de formule M Fe 0₄, dans laquelle M a la même définition que ci-dessus.

2. Ferrates conformes à la revendication 1, caractérisés en ce que X est choisi parmi les atomes suivants : AI, Si, P, S, CI, Mo, Mn et le mélange de ces atomes.

3. Ferrates conformes à l'une des revendications 1 ou 2, caractérisés en ce que le rapport Fe/X (nombres d'atomes de Fe sur celui des atomes de X) est compris entre 0,5 et 0,9).

4. Utilisation des ferrates conformes à l'une des revendications 1 à 3, en tant qu'oxydants.

5. Utilisation des ferrates conformes à l'une des revendications 1 à 3 pour le traitement par oxydation des eaux usées.

## Patentansprüche

1. Ferrate mit der Formel 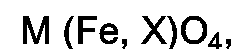 wobei M für zwei Na- oder K-Atome oder ein Ca-oder Ba-Atom steht, und X ein Atom ist, dessen Kation eine Edelgas-Elektronenkonfiguration besitzt, wobei die Ferrate isomorph zu Ferraten der Formel M Fe 0₄ sind, in der M für die gleichen Elemente wie oben steht.

2. Ferrate nach Anspruch 1, dadurch gekennzeichnet, daß X aus den Atomen Al, Si, P, S, Cl, Mo, Mn und einem Gemisch dieser Elemente ausgewählt ist.

3. Ferrate nach Anspruch 1 oder 2, dadurch gekennzeichnet, daß das Verhältnis Fe/(X+Fe) (Anzahl der Fe-Atome zur Anzahl der (X+Fe-Atome) 0,5 bis 0,9 beträgt.

4. Verwendung der Ferrate gemäß Anspruch 1 bis 3 als Oxydantien.

5. Verwendung der Ferrate nach Anspruch 1 bis 3 zur Oxydationsbehandlung von Abwässern.

## Claims

1. Ferrates having the formula: 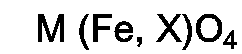 where M denotes two atoms of Na or K or one atom of Ca or Ba, and X is an atom whose cation has the electronic structure of a rare gas, said ferrates being isomorphs offerrates of the formula M Fe 0₄, where M has the same definition as above.

2. Ferrates according to claim 1, characterised in thatX is selected from the following atoms: AI, Si, P, S, Cl, Mo, Mn and the mixture of these atoms.

3. Ferrates according to claim 1 or 2, characterised in that the ratio Fe/(X+Fe) (numberof atoms of Fe over the number of atoms of (X+Fe) is between 0.5 and 0.9.

4. Use of the ferrates according to any one of claims 1 to 3 as oxidants.

5. Use of the ferrates according to any one of claims 1 to 3 for the treatment of waste water by oxidation.
